# EUROPÄISCHE PATENTSCHRIFT

(11) **EP 1 991 404 B1**
(45) Veröffentlichungstag und Bekanntmachung des Hinweises auf die Patenterteilung: **18.08.2010**
(21) Anmeldenummer: 07721965.7
(22) Anmeldetag: 27.02.2007
(51) Int. Cl.: B29C 33/10, B29C 44/34, B29C 45/14, B29C 45/34, B29C 70/76

(54) **VORRICHTUNG UND VERFAHREN ZUM SCHÄUMEN ODER SPRITZGIESSEN EINES KUNSTSTOFFRAHMENS EINES FLÄCHIGEN WERKSTÜCKS**
DEVICE AND METHOD FOR FOAMING OR INJECTION-MOLDING A PLASTIC FRAME OF A PLANAR WORKPIECE
DISPOSITIF ET PROCÉDÉ POUR LE MOUSSAGE OU LE MOULAGE PAR INJECTION D'UN CADRE EN PLASTIQUE D'UNE PIÈCE PLANE

(30) Priorität: 03.03.2006 DE 102006009991
(43) Veröffentlichungstag der Anmeldung: 19.11.2008
(73) Patentinhaber: Webasto AG, 82131 Stockdorf (DE)
(72) Erfinder: STÜLLENBERG, Uwe, 84069 Schierling (DE); SCHMID, Johann, 84066 Mallersdorf-Pfaffenhofen (DE); KRUMPHOLZ, Helmut, 85120 Hepberg (DE); WITOWSKI, Reinfried, 93352 Rohr in N.B. (DE)
(74) Vertreter: Grünberg, Thomas
(86) Internationale Anmeldenummer: PCT/DE2007/000364
(87) Internationale Veröffentlichungsnummer: WO 2007/098740

(56) Entgegenhaltungen:
- EP-A- 1 312 455
- DE-A1- 10 337 461
- DE-C1- 10 036 630

## Beschreibung

Die Erfindung betrifft eine Vorrichtung zum Schäumen oder Spritzgießen eines Kunststoffrahmens eines flächigen Werkstücks nach dem Oberbegriff des Patentanspruchs 1 sowie ein Verfahren zum Schäumen oder Spritzgießen eines Kunststoffrahmens eines flächigen Werkstücks nach dem O-berbegriff des Patentanspruchs 10.

Aus der DE 100 36 630 Cl sind eine derartige Vorrichtung gemäß dem Oberbegriff des Anspruchs 1 und ein derartiges Verfahren gemäß dem Oberbegriff des Anspruchs 10 bekannt. Die Vorrichtung dient insbesondere zum Schäumen eines Kunststoffrahmens eines Deckelelementes, das bei einem Schiebedach bzw. einem Hubschiebedach eines Kraftfahrzeugs eingesetzt wird. Der Kunststoffrahmen ist aus einem Polyurethanschaum gebildet und kann insbesondere zur Befestigung von Einlegeteilen und/oder einer umlaufenden Dichtung des Deckelelements dienen. Die Einlegeteile können zur Anbindung des Deckelelementes an einen Antriebsmechanismus des Schiebedachs oder auch zur Versteifung des Deckelelementes bestimmt sein.

Die aus der DE 100 36 630 Cl bekannte Vorrichtung ist als Formwerkzeug ausgebildet, das einen rahmenartigen Formhohlraum aufweist, der im Bereich eines Kavitätsschenkels, der einer Angussseite des Formhohlraums gegenüberliegt, eine Entlüftungseinrichtung hat. Die Entlüftungseinrichtung ist bezogen auf den hergestellten Kunststoffrahmen nach außen gerichtet, so dass die durch das in den Formhohlraum eingebrachte Polyurethan verdrängte Luft bezogen auf die Formwerkzeugmitte nach außen an die Umgebung abgeführt wird.

Häufig ist es erforderlich, zur Versteifung eines derartig hergestellten Schiebedachdeckels Einlegeteile in dem Polyurethanrahmen einzubetten. Dies kann aber zur Folge haben, dass das Abführen der Luft aus dem Formhohlraum nicht gesteuert werden kann, wodurch sich wiederum insbesondere an der Rahmeninnenseite im Bereich der Einlegeteile so genannte, durch Lufteinschlüsse hervorgerufene Lunker bilden können, was nicht erwünscht ist.

Der Erfindung liegt die Aufgabe zugrunde, eine Vorrichtung und ein Verfahren zum Schäumen oder Spritzgießen eines Kunststoffrahmens eines flächigen Bauteils mit einer zuverlässigen Entlüftung des Formhohlraums des eingesetzten Formwerkzeugs auch beim Einsatz von Einlegeteilen in dem Kunststoffrahmen zu schaffen.

Diese Aufgabe ist erfindungsgemäß durch die Vorrichtung mit den Merkmalen des Patentanspruchs 1 und durch das Verfahren mit den Merkmalen des Patentanspruchs 10 gelöst.

Der Kern der Erfindung besteht mithin darin, dass an dem zum Schäumen oder Spritzgießen des Kunststoffrahmens eingesetzten Formwerkzeug eine Entlüftungsöffnung vorgesehen ist, die bezogen auf den hergestellten Kunststoffrahmen nach ihnen gerichtet ist, so dass in einem vereinigungsbereich zweier Werkstofffronten die Luft wirkungsvoll aus dem Formhohlraum des Formwerkzeugs abgeführt werden kann. Gegebenenfalls durch die Entlüftungsöffnung austretender Kunststoffwerkstoff wird in der Auffangeinrichtung gesammelt und nach der Entnahme des mit dem Kunststoffrahmen umschäumten Werkstücks aus dem Formwerkzeug aus der Vorrichtung entnommen. Die erfindungsgemäße Auslegung der Vorrichtung gewährleistet, dass beim Einsatz von Einlegeteilen in einem der Angussseite gegenüberliegenden Kavitätsschenkel des an das Werkstück angrenzenden Formhohlraums keine Lunker entstehen können. Vielmehr wird gewährleistet, dass die Luft vollständig in gesteuerter Weise aus dem Formhohlraum ausgetragen werden kann.

Die Vorrichtung nach der Erfindung kann grundsätzlich zum Spritzen oder Schäumen beliebiger flächiger Werkstücke eingesetzt werden. Insbesondere eignet sich die Vorrichtung nach der Erfindung aber zum Umschäumen bzw. Umspritzen einer planen oder gewölbten Glastafel, die beispielsweise bei einem Glasschiebedach eines Kraftfahrzeugs als Deckelelement zum Einsatz kommt. In diesem Fall wird die Glastafel in dem Formwerkzeug mit einem Kunststoffrahmen versehen, der wie üblich aus einem Polyurethanschaum bestehen kann und zur Aufnahme einer umlaufenden Dichtung und/oder zur Anbindung von Einlegeteilen dient, so dass das Deckelelement eine Verstärkung erfährt und eine Anbindung der Glastafel an den Fahrzeugaufbau bzw. einen Schiebedachantrieb möglich ist.

Bei einer bevorzugten Ausführungsform der Vorrichtung nach der Erfindung ist die Entlüftungsöffnung aus einer Bohrung in einer Werkzeugwand gebildet, die den Formhohlraum und die Auffangeinrichtung trennt. Durch eine derartige Auslegung kann der durch die Entlüftungsöffnung üblicherweise ausgetriebene Kunststoffwerkstoff beim Entformen des Glasdeckels aus dem Formwerkzeug kontrolliert abgeschert werden.

Um den durch die Entlüftungsöffnung ausgetragenen Kunststoffwerkstoff spritzfrei sammeln zu können, ist die Auffangeinrichtung vorzugsweise wannenartig ausgebildet und mit Seitenwänden versehen, an deren Oberseite eine Dichteinrichtung zur Anlage des flächigen Werkstücks angeordnet ist.

Das Ablaufverhalten des durch die Entlüftungsöffnung ausgetragenen Kunststoffwerkstoffs kann weiter verbessert werden, wenn die Entlüftungsöffnung in eine Rinne mündet, die den Kunststoffwerkstoff zu der Auffangeinrichtung fördert.

Die Rinne, die vorzugsweise einen V-förmigen Querschnitt hat, ist zur weiteren Optimierung zwischen der Entlüftungsöffnung und der Auffangeinrichtung abfallend ausgebildet, so dass der durch die Entlüftungsöffnung ausgetragene Kunststoffwerkstoff in die Auffangeinrichtung abfließen kann.

Bei einer zweckmäßigen Ausführungsform der Vorrichtung nach der Erfindung ist die Rinne an einem Werkzeugeinsatz ausgebildet, der in einer Ausnehmung der den Formhohlraum und die Auffangeinrichtung trennenden Werkzeugwand des Unterwerkzeugs angeordnet ist. Die Ausnehmung schließt sich unmittelbar an die rahmeninnenseitig angeordnete Entlüftungsöffnung des Unterwerkzeugs an.

Des Weiteren ist die Vorrichtung nach der Erfindung vorzugsweise mit einem Abdeckelement versehen, die das flächige Werkstück zumindest im Bereich der Auffangeinrichtung vor aus der Entlüftungsöffnung austretendem Kunststoffwerkstoff schützt. Das Abdeckelement gewährleistet mithin, dass nach dem Anschäumen bzw. Anspritzen des Kunststof&ahmens Kunststoffwerkstoff in ungewünschten Bereichen des flächigen Werkstücks anhaftet. Das Abdeckelement ist beispielsweise aus einem dünnen Blechstreifen oder dergleichen gebildet.

Um zu gewährleisten, dass der durch die Entlüftungsöffnung austretende Kunststoffwerkstoff nach Beendigung des Schäum- bzw. Spritzgießprozesses ohne großen Aufwand von dem Abdeckelement getrennt werden kann, ist dieses vorzugsweise schwenkbar gelagert, so dass dessen Unterseite vor dem Schäum- bzw. Spritzvorgang mit einem Trennmittel besprüht werden kann.

Insbesondere kann eine schwenkbare Lagerung des Abdeckelementes durch einen Scharnierblock realisiert sein, an dem das Abdeckelement befestigt ist und in dem zur Sicherung der Betriebsstellung des Abdeckelementes ein Magnet integriert ist.

Weitere Vorteile und vorteilhafte Ausgestaltungen des Gegenstandes nach der Erfindung sind der Beschreibung, der Zeichnung und den Patentansprüchen entnehmbar.

Ein Ausführungsbeispiel einer Vorrichtung zum Schäumen eines Kunststoffrahmens einer als Deckelelement eines Schiebedachs dienenden Glasplatte ist in der Zeichnung schematisch vereinfacht dargestellt und wird in der nachfolgenden Beschreibung näher erläutert. ES zeigt:
- Fig. 1: einen stark schematisierten Schnitt durch ei- ne Schäumvorrichtung;
- Fig. 2: eine Draufsicht auf ein Unterwerkzeug der Schäumvorrichtung;
- Fig. 3: eine vergrößerte Ansicht des Bereichs III in Fig. 2; und
- Fig. 4: einen Schnitt entlang der Linie IV-IV in Fig. 3.

In der Zeichnung ist eine Vorrichtung 10 zur Herstellung eines aus einem Polyurethanschaum bestehenden Kunststoffrahmens eines Glasdeckelelementes eines hier nicht näher dargestellten Kraftfahrzeugschiebedachs dargestellt. Der Kunststoffrahmen bildet den Randbereich einer Glastafel bzw. -platte 12.

Zum Umschäumen mit dem Kunststoffrahmen wird die Glasplatte 12 in die Vorrichtung 10 eingelegt, so dass sie in ihren Randbereichen von einem Formhohlraum 14 begrenzt ist, der von einem Oberwerkzeug 16 und einem Unterwerkzeug 18 eines Formwerkzeugs 20 gebildet ist, das an einem nicht näher dargestellten Formenträger montiert ist.

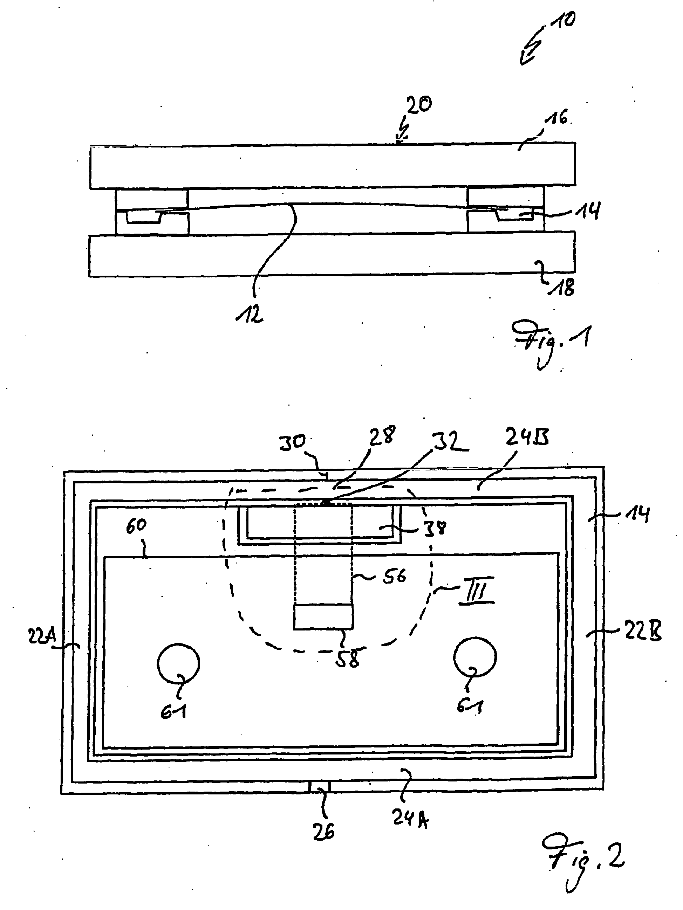

Wie insbesondere Fig. 2 zu entnehmen ist, hat der Formhohlraum 14 einen rahmenartigen Grundriss mit zwei parallelen kurzen Kavitätsschenkeln 22A und 22B sowie zwei parallelen langen Kavitätsschenkeln 24A und 24B. Im Bereich des langen Kavitätsschenkels 24A ist eine Angussmündung 26 angeordnet, über die der Polyurethanwerkstoff in den Formhohlraum 14 eingebracht wird, so dass der Polyurethanwerkstoff zwei Werkstofffronten bildet, die einerseits über den einen kurzen Kavitätsschenkel 22A und andererseits über den anderen kurzen Kavitätsschenkel 22B zu dem langen der Angussmündung 26 abgewandten bzw. gegenüberliegenden Kavitätsschenkel 24B strömen und sich in einem mittleren, einen Vereinigungsbereich bildenden Bereich 28 des langen Kavitätsschenkels 24B wieder treffen.

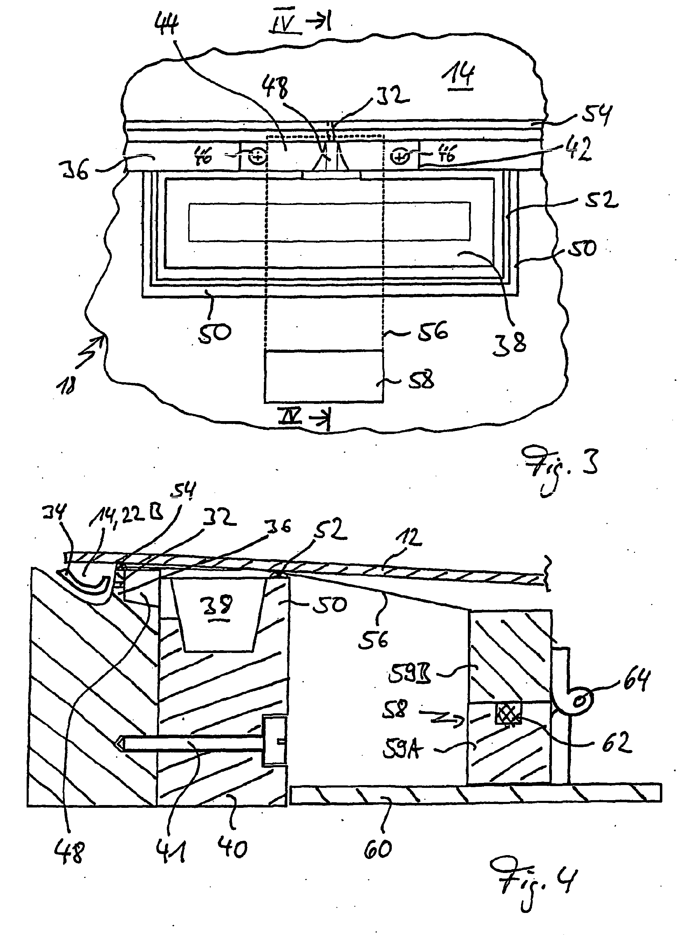

Reim Einströmen des polyurethanwerkstoffs in den Formhohlraum 14 wird die in dem Formhohlraum 14 vorhandene Luft über einen rahmenaußenseitigen Entlüftungsschlitz 30 und eine rahmeninnenseitige Entlüftungsbohrung 32 aus dem Formhohlraum 14 verdrängt. Wie Fig. 4 zu entnehmen, wird in den der Angussmündung 26 gegenüberliegenden, langen Kavitätsschenkel 24B vor dem Umschäumen der Glasplatte 12 ein als Formblech ausgebildetes Einlegeteil 34 eingelegt, das zur Versteifung des fertigen Deckelelementes beiträgt.

Die Entlüftungsbohrung 32, die rahmeninnenseitig in eine Werkzeugwand 36 des Unterwerkzeugs 18 eingebracht ist und im vorliegenden Fall einen Durchmesser von etwa 2 mm hat, führt zu einer wannenartigen Auffangeinrichtung 38, die auch als Entlüftungstasche bezeichnet wird und in der durch die Entlüftungsbohrung 32 austretender Polyurethanwerkstoff gesammelt wird. Die wannenartige Auffangeinrichtung 38 ist an einem Werkzeugblock 40 ausgebildet, der an dem Unterwerkzeug 18 mittels Schrauben 41 fixiert ist.

In der die wannenartige Auffangeinrichtung 38 und den Formhohlraum 14 trennenden Werkzeugwand 36 ist des Weiteren eine Ausnehmung 42 ausgebildet, in die ein Werkzeugeinsatz 44 eingesetzt ist, der mittels zweier vertikal eingreifender Schrauben 46 fixiert ist und eine Rinne 48 mit im Wesentlichen V-förmigem Querschnitt aufweist, die in der der Entlüftungsbohrung 32 abgewandten Richtung abfallend ist, so dass aus der Entlüftungsbohrung 32 austretender Polyurethanwerkstoff in die wannenartige Auffangeinrichtung 38 abfließen kann.

Die Auffangeinrichtung 38 weist Seitenwände 50 auf, die an ihrer Oberseite mit einer Dichtung 52 zur Anlage der Glasplatte 12 versehen sind. Des Weiteren ist an der Oberseite der den Formhohlraum 14 und die Auffangeinrichtung 38 trennenden Werkzeugwand 36 eine Dichtung 54 angeordnet, die verhindert, dass Polyurethanwerkstoff in unkontrollierter Weise aus dem Formhohlraum 14 austritt.

Das Unterwerkzeug 18 des Formwerkzeugs 20 weist des Weiteren ein eine Lasche bildendes Abdeckelement 56 auf, das aus einem Metallblechstreifen gebildet ist und in der in Fig. 4 dargestellten Betriebsstellung einen zentralen Bereich der Auffangeinrichtung 38 und die Rinne 48, die sich an die Entlüftungsöffnung 32 anschließt, überdeckt und bis nahe an die auf der Werkzeugwand 36 angeordnete Richtung 36 reicht.

Um die Unterseite des Abdeckelementes 56 mit einem Trennmittel besprühen zu können, ist dieses an einem Scharnierblock 58 befestigt, der an einer in vertikaler Richtung verstellbaren Werkzeugplatte 60 verankert ist, an der auch Saugeinrichtungen 61 zur Halterung der Glasplatte 12 in dem Formwerkzeug 20 ausgebildet sind. Der Scharnierblock 58 zwei gelenkig miteinander verbundene Blockelemente 59A und 59B auf, wobei das obere Blockelement 59B in Betriebsstellung des Abdeckelementes 56 mittels eines Magneten 62 an dem unteren, fest mit der Werkzeugplatte 61 verbundenen Blockelement 59B gehalten ist.

Die Herstellung eines Polyurethanrahmens der Glasplatte 12 erfolgt in nachfolgend beschriebener Weise.

Vor dem Einbringen der Glasplatte 12 in das Formwerkzeug 20 werden die den Formhohlraum 14 begrenzenden Flächen, die Rinne 48, die wannenförmige Auffangeinrichtung 38 und die Unterseite des Abdeckelementes 56 mit einem Trennmittel besprüht. Um die Unterseite des Abdeckelementes 56 mit dem Trennmittel besprühen zu können, wird das Abdeckelement 56 um eine Schwenkachse 64 des Scharnierblocks 58 in der der Auffangeinrichtung 38 abgewandten Richtung verschwenkt. Anschließend wird das Abdeckelement 56 in die in Fig. 4 dargestellte Stellung zurückgeschwenkt. Diese Stellung wird mittels des Magneten 62 des Scharnierblocks 58 gesichert.

Anschließend werden in den Formhohlraum 14 Einlegeteile eingelegt. In den Kavitätsschenkel 24B wird das Einlegeteil 34 eingelegt. Dann wird die Glasplatte 12 in das Formwerkzeug 20 eingebracht, woraufhin das Oberwerk 16 und das Unterwerkzeug 18 in die in Fig. 1 dargestellte Stellung verfahren werden, so dass in einem den Rand der Glasplatte 12 umschließenden Bereich der Formhohlraum 14 ausgebildet ist.

Nach dem Schließen des Formwerkzeugs 20 wird über die Angussmündung 26 der Polyurethanwerkstoff in den Formhohlraum 14 eingebracht, so dass sich zwei Werkstofffronten bilden, die in Umfangsrichtung aufeinander zulaufen und sich in dem Vereinigungsbereich 28 wieder miteinander vereinigen. Die in dem Formhohlraum 14 enthaltene Luft wird hierbei einerseits über den rahmenaußenseitigen Entlüftungsschlitz 30 und andererseits über die rahmeninnenseitig angeordnete Entlüftungsbohrung 32 ausgetrieben. Während des Schäumprozesses liegt die Glasplatte 12 an dem Abdeckelement 56 an, so dass verhindert wird, dass aus der Entlüftungsöffnung 32 austretender Polyurethanwerkstoff auf die Glasplatte 12 trifft.

Nach dem Schäumprozess und dem anschließenden Aushärten des in dem Formhohlraum 14 zu bildenden Polyurethanrahmens der Glasplatte 12 wird die nun mit einem Rahmen versehene Glasplatte 12 durch Auseinanderfahren des Oberwerkzeugs 16 und des Unterwerkzeugs 18 entformt und aus dem Formwerkzeug 20 entnommen. Beim Entformen wird der gebildete Polyurethanrahmen selbsttätig von dem durch die rahmeninnenseitig angeordnete Bohrung 32 getretenen Polyurethanwerkstoff abgeschert.

Anschließend wird das Abdeckelement 56 in der der Auffangeinrichtung 38 abgewandten Richtung verschwenkt, so das das in der Auffangeinrichtung 38 gesammelte Polyurethanmaterial entnommen und entsorgt werden kann. Das Formwerkzeug 20 kann nun für einen weiteren Schäumprozess vorbereitet werden.

### Bezugszeichen

- 10: Vorrichtung
- 12: Glasplatte
- 14: Formhohlraum
- 16: Oberwerkzeug
- 18: Unterwerkzeug
- 20: Formwerkzeug
- 22A,B: kurzer Kavitätsschenkel
- 24A,B: langer Kavitätsschenkel
- 26: Angussmündung
- 28: Vereinigungsbereich
- 30: Entlüftungsschlitz
- 32: Entlüftungsbohrung
- 34: Einlegeteil
- 36: Werkzeugwand
- 38: Auffangeinrichtung
- 40: Werkzeugblock
- 41: Schraube
- 42: Ausnehmung
- 44: Werkzeugeinsatz
- 46: Schrauben
- 48: Rinne
- 50: Seitenwände
- 52: Dichtung
- 54: Dichtung
- 56: Abdeckelement
- 58: Scharnierblock
- 59A,B: Blockelemente
- 60: Werkzeugplatte
- 61: Saugeinrichtungen
- 62: Magnet
- 64: Schwenkachse

## Patentansprüche

1. Vorrichtung zum Schäumen oder Spritzen eines Kunststoffrahmens eines flächigen Werkstücks (12), insbesondere einer Glasplatte, umfassend ein Formwerkzeug (20), das ein Oberwerkzeug (16) und ein Unterwerkzeug (18) sowie einen rahmenartigen Formhohlraum (14) aufweist, der im Bereich eines einer Angussmündung (26) abgewandten Kavitätsschenkels (24B) mindestens eine Entlüftungsöffnung (32) hat, **dadurch gekennzeichnet, dass** die Entlüftungsöffnung (32) bezogen auf den rahmenartigen Formhohlraum (14) rahmeninnenseitig angeordnet ist und zu einer Auffangeinrichtung (38) führt, die in einem von dem rahmenartigen Formhohlraum (14) umschlossenen Bereich des Unterwerkzeugs (18) angeordnet ist.

2. Vorrichtung nach Anspruch 1, **dadurch gekennzeichnet, dass** die Entlüftungsöffnung (32) eine Bohrung in einer Werkzeugwand (36) ist, die den Formhohlraum (14) und die Auffangeinrichtung (38) trennt.

3. Vorrichtung nach Anspruch 1 oder 2, **dadurch gekennzeichnet, dass** die Auffangeinrichtung (38) wannenartig ausgebildet ist und Seitenwände (50) aufweist, an deren Oberseite eine Dichteinrichtung (52) zur Anlage des flächigen Bauteils (12) angeordnet ist.

4. Vorrichtung nach einem der Ansprüche 1 bis 3, **dadurch gekennzeichnet, dass** die Entlüftungsöffnung (32) in eine Rinne (48) mündet, die einen durch die Entlüftungsöffnung (32) austretenden Kunststoffwerkstoff zu der Auffangeinrichtung (38) fördert.

5. Vorrichtung nach Anspruch 4, **dadurch gekennzeichnet, dass** die Rinne (48) zwischen der Entlüftungsöffnung (32) und der Auffangeinrichtung (38) abfallend ist.

6. Vorrichtung nach Anspruch 4 oder 5, **dadurch gekennzeichnet, dass** die Rinne (48) an einem Werkzeugeinsatz (44) ausgebildet ist, der in einer Ausnehmung (42) einer den Formhohlraum (14) und die Auffangeinrichtung (38) trennenden Werkzeugwand (36) des Unterwerkzeugs (18) angeordnet ist.

7. Vorrichtung nach einem der Ansprüche 1 bis 6, **gekennzeichnet durch** ein Abdeckelement (56), das das flächige Werkstück zumindest im Bereich der Auffangeinrichtung (38) vor aus der Entlüftungsöffnung (32) austretendem Kunststoffwerkstoff schützt.

8. Vorrichtung nach Anspruch 7, **dadurch gekennzeichnet, dass** das Abdeckelement (56) eine vorzugsweise schwenkbar gelagerte Lasche ist.

9. Vorrichtung nach Anspruch 8, **gekennzeichnet durch** einen Scharnierblock (58), an dem das Abdeckelement (56) befestigt ist und in den mindestens ein Magnet (62) zur Sicherung der Betriebsstellung des Abdeckelementes (56) integriert ist.

10. Verfahren zur Herstellung eines geschäumten oder spritzgegossenen Kunststoffrahmens eines flächigen Werkstücks (12), insbesondere einer Glasplatte, wobei das flächige Werkstück (12) in einem Formwerkzeug (20) angeordnet wird und ein Kunststoffwerkstoff so in einen Formhohlraum (14) des Formwerkzeugs (20) eingebracht wird, dass zwei Werkstofffronten entstehen, die in Umfangsrichtung aufeinander zulaufen und sich in einem Vereinigungsbereich (28) miteinander vereinigen, **dadurch gekennzeichnet, dass** der Formhohlraum in dem Vereinigungsbereich (28) rahmeninnenseitig entlüftet wird.

11. Verfahren nach Anspruch 10, **dadurch gekennzeichnet, dass** die rahmeninnenseitige Entlüftung über eine Entlüftungsöffnung (32) erfolgt, die zu einer Auffangeinrichtung (38) für den Kunststoffwerkstoff führt.

12. Verfahren nach Anspruch 10 oder 11, **dadurch gekennzeichnet, dass** in einem den Vereinigungsbereich (28) aufweisenden Kavitätsschenkel (24B) des Formhohlraums (14) ein Verstärkungselement (34) als Einlegeteil in dem Formhohlraum (14) angeordnet wird.

13. Verfahren nach Anspruch 11, **dadurch gekennzeichnet, dass** das flächige Werkstück (12) im Bereich des Austritts der Entlüftungsöffnung mittels einer Lasche des Formwerkzeugs abgedeckt wird, so dass in diesem Bereich kein Kunststoffwerkstoff auf das flächige Werkstück (12) trifft.

14. Verfahren nach Anspruch 13, **dadurch gekennzeichnet, dass** die Lasche an ihrer der Entlüftungsöffnung (32) und der Auffangeinrichtung (38) zugewandten Seite mit einem Trennmittel beaufschlagt wird.

## Claims

1. Device for foaming or injection moulding a plastic frame of a planar workpiece (12), in particular a glass plate, comprising a moulding tool (20) which has a top tool (16) and a bottom tool (18) and also a frame-like moulding cavity (14), which has at least one vent hole (32) in the region of a cavity leg (24B) facing away from a sprue orifice (26), **characterized in that** the vent hole (32) is arranged on the inside of the frame in relation to the frame-like moulding cavity (14) and leads to a collecting device (38), which is arranged in a region of the bottom tool (18) that is enclosed by the frame-like moulding cavity (14).

2. Device according to Claim 1, **characterized in that** the vent hole (32) is a drilled hole in a tool wall (36) which separates the moulding cavity (14) and the collecting device (38).

3. Device according to Claim 1 or 2, **characterized in that** the collecting device (38) is trough-like and has side walls (15) on the upper side of which there is arranged a sealing device (52) to bear on the planar workpiece (12).

4. Device as claimed one of Claims 1 to 3, **characterized in that** the vent hole (32) opens into a channel (48) which conveys a plastic material emerging through the vent hole (32) to the collecting device (38).

5. Device according to Claim 4, **characterized in that** the channel (48) falls between the vent hole (32) and the collecting device (38).

6. Device according to Claim 4 or 5, **characterized in that** the channel (48) is formed on a tool insert (44) which is arranged in a recess (42) in a tool wall (36) that separates the moulding cavity (14) and the collecting device (38) in the bottom tool (18).

7. Device according to one of Claims 1 to 6, **characterized by** a covering element (56), which protects the planar workpiece against plastic material emerging from the vent hole (32), at least in the region of the collecting device (38).

8. Device according to Claim 7, **characterized in that** the covering element (56) is a preferably pivotably mounted flap.

9. Device according to Claim 8, **characterized by** a hinge block (58), to which the covering element (56) is fixed and in which at least one magnet (62) is integrated in order to secure the operating position of the covering element (56).

10. Method for producing a foamed or injection moulded plastic frame of a planar workpiece (12), in particular a glass plate, the planar workpiece (12) being arranged in a moulding tool (20) and a plastic material being introduced into a moulding cavity (14) of the moulding tool (20) in such a way that two material fronts are produced, which run toward each other in the circumferential direction and combine with each other in a combining region (28), **characterized in that** the moulding cavity is vented on the inside of the frame in the combining region (28).

11. Method according to Claim 10, **characterized in that** the venting on the inside of the frame is carried out via a vent hole (32), which leads to a collecting device (38) for the plastic material.

12. Method according to Claim 10 or 11 **characterized in that**, in a cavity leg (24B) which has the combining region (28) of the moulding cavity (14), a reinforcing element (34) is arranged in the moulding cavity (14) as an embedded part.

13. Method according to Claim 11, **characterized in that** the planar workplace (12) is covered in the region of the exit of the vent hole by means of a flap of the moulding tool, so that in this region no plastic material encounters the planar workpiece (12).

14. Method according to Claim 13, **characterized in that** a release agent is applied to the flap on its side facing the vent hole (32) and the collecting device (38).

## Revendications

1. Dispositif pour le moussage ou l'injection d'un cadre en matière plastique d'une pièce plane (12), en particulier d'une plaque de verre, comprenant un outil de moulage (20), qui présente un outil supérieur (16) et un outil inférieur (18) ainsi qu'une cavité de moulage (14) en forme de cadre, qui comporte au moins une ouverture de purge d'air (32) dans la région d'une branche de la cavité (24B) située à l'opposé d'un orifice de coulée (26), **caractérisé en ce que** l'ouverture de purge d'air (32) est disposée du côté intérieur du cadre par rapport à la cavité de moulage en forme de cadre (14) et conduit à un dispositif de réception (38) qui est disposé dans une zone de l'outil inférieur (18) entourée par la cavité de moulage en forme de cadre (14).

2. Dispositif selon la revendication 1, **caractérisé en ce que** l'ouverture de purge d'air (32) est un perçage dans une paroi d'outil (36), qui sépare la cavité de moulage (14) et le dispositif de réception (38).

3. Dispositif selon la réception 1 ou 2, **caractérisé en ce que** le dispositif de réception (38) est réalisé en forme de cuvette et présente des parois latérales (50), dont le côté supérieur est pourvu d'un dispositif d'étanchéité (52) pour le dépôt de la pièce plane (12).

4. Dispositif selon l'une quelconque des revendications 1 à 3, **caractérisé en ce que** l'ouverture de purge d'air (32) débouche dans une rigole (48), qui transporte une matière plastique sortant à travers l'ouverture de purge d'air (32) vers le dispositif de réception (38).

5. Dispositif selon la revendication 4, **caractérisé en ce que** la rigole (48) descend entre l'ouverture de purge d'air (32) et le dispositif de réception (38).

6. Dispositif selon la revendication 4 ou 5, **caractérisé en ce que** la rigole (48) est formée sur un insert d'outil (44), qui est agencé dans un évidement (42) d'une paroi d'outil (36) de l'outil inférieur (18) séparant la cavité de moulage (14) et le dispositif de réception (38).

7. Dispositif selon l'une quelconque des revendications 1 à 6, **caractérisé par** un élément de recouvrement (56), qui protège la pièce plane contre la matière plastique sortant de l'ouverture de purge d'air (32), au moins dans la région du dispositif de réception (38).

8. Dispositif selon la revendication 7, **caractérisé en ce que** l'élément de recouvrement (56) est une patte montée de préférence de façon pivotante.

9. Dispositif selon la revendication 8, **caractérisé par** un bloc de charnière (58), sur lequel l'élément de recouvrement (56) est fixé et dans lequel au moins un aimant (62) est intégré pour la fixation de la position de travail de l'élément de recouvrement (56).

10. Procédé pour la fabrication d'un cadre en matière plastique expansée ou moulée par injection d'une pièce plane (12), en particulier d'une plaque de verre, dans lequel on dispose la pièce plane (12) dans un outil de moulage (20) et on introduit une matière plastique dans une cavité de moulage (14) de l'outil de moulage (20) de telle manière qu'il apparaisse deux fronts de matière, qui s'écoulent l'un vers l'autre en direction périphérique et se réunissent dans une zone d'unification (28), **caractérisé en ce que** l'on purge l'air de la cavité de moulage du côté intérieur du cadre dans la zone d'unification (28).

11. Procédé selon la revendication 10, **caractérisé en ce que** l'on effectue la purge d'air du côté intérieur du cadre au moyen d'une ouverture de purge d'air (32), qui conduit à un dispositif de réception (38) pour la matière plastique.

12. Procédé selon la revendication 10 ou 11, **caractérisé en ce que** l'on dispose, dans une branche de cavité (24B) de la cavité de moulage (14) présentant la zone d'unification (28), un élément de renforcement (34) comme pièce insérée dans la cavité de moulage (14).

13. Procédé selon la revendication 11, **caractérisé en ce que** l'on recouvre la pièce plane (12), dans la région de la sortie de l'ouverture de purge d'air, au moyen d'une patte de l'outil de moulage, de telle manière qu'aucune matière plastique n'arrive dans cette zone sur la pièce plane (12).

14. Procédé selon la revendication 13, **caractérisé en ce que** la patte est exposée à un moyen de séparation sur son côté tourné vers l'ouverture de purge d'air (32) et vers le dispositif de réception (38).
